# EUROPEAN PATENT APPLICATION

(11) **EP 4 270 890 A1**
(43) Date of publication of application: **01.11.2023**
(21) Application number: 22170701.1
(22) Date of filing: 29.04.2022
(51) Int. Cl.: H04L 41/0604, H04L 41/0631, H04L 41/147, H04L 41/0654

(54) **PREDICTIVE ALARM INFORMATION**

(71) Applicant: Nokia Solutions and Networks Oy, 02610 Espoo (FI)
(72) Inventor: GOERGE, Jürgen, 82061 Neuried (DE); POLLAKOWSKI, Olaf, 14057 Berlin (DE)
(74) Representative: TBK

(57) **Abstract**

Method comprising:
issuing an alarm related to an object instance, wherein the alarm comprises a start time; wherein
the start time is a future time; and
the alarm indicates that the object instance will be faulty from the start time on.

## Description

### Field of the invention

The present disclosure relates to predictive alarm information.

### Abbreviations

- 3GPP: 3^{rd} Generation Partnership Project
- 5G/6G/7G: 5^{th}/6^{th}/7^{th} Generation
- DN: Distinguished Name
- ITU: International Telecommunication Union
- ITU-T: ITU Telecommunication Standardization Sector
- MDAS: Management Data Analytics Service
- MNO: Mobile Network Operator
- NMS: Network Management System
- NWDAF: Network Data Analytics Function
- SA: System Architecture
- TS: Technical Specification

### Background

3GPP SA1 collected requirements from electricity grid operators regarding communication systems that are used to control their devices used to distribute the electricity. In this context, 3GPP SA5 discusses to run a study item for Rel-18 *"Feasibility Study on Network and Service Operations for Energy Verticals".*

By this item, SA5 might analyse specific requirements and solutions that the energy generation and distribution needs from the network management in order to prepare fallback solutions in case the mobile network might experience planned or predicted failures.

In context of the study on the management data analytics service ("MDAS"), 3GPP SA5 is discussing how to inform the consumers of such an analytics service about predictions, that such analytics service might produce. Current state of the discussion are to inform the consumers by "reports", which are represented by new information elements in a new format, specific for each kind of prediction use case.

### References

[1] 3GPP TS 28.532 *"Management and orchestration; Generic management services"*

### Summary

It is an object of the present invention to improve the prior art.

According to a first aspect of the invention, there is provided an apparatus comprising:
one or more processors, and
memory storing instructions that, when executed by the one or more processors, cause the apparatus to perform:
   issuing an alarm related to an object instance, wherein the alarm comprises a start time; wherein
   the start time is a future time; and
   the alarm indicates that the object instance will be faulty from the start time on.

The alarm may comprise an end time or a time duration, and the alarm may indicate that the object instance will be faulty until the end time or for the time duration, respectively.

The alarm may comprise a probability, and the alarm may indicate that the object instance will be faulty with the first probability.

The alarm may comprise a first accuracy indicating an accuracy of the start time.

The alarm may comprise a second accuracy indicating an accuracy of the end time and the time duration, respectively.

The instructions, when executed by the one or more processors, may further cause the apparatus to perform: predicting that the object instance will be faulty from the start time on.

The instructions, when executed by the one or more processors, may further cause the apparatus to perform at least one of:
predicting that the object instance will be faulty until the end time and for the time duration, respectively;
predicting the probability that the object instance will be faulty;
predicting the first accuracy of the start time; and
predicting the second accuracy of the end time and the time duration, respectively.

The instructions, when executed by the one or more processors, may further cause the apparatus to perform:
receiving a prediction that the object instance will be faulty from the start time on;
generating the alarm based on the received prediction.

The received prediction may predict at least one of that the object instance will be faulty until the end time and for the time duration, respectively, the probability that the object instance will be faulty, the first accuracy of the start time, and the second accuracy of the end time and the time duration, respectively.

The instructions, when executed by the one or more processors, may further cause the apparatus to perform:
monitoring if the object instance is actually faulty; and at least one of:
removing the start time from the alarm if the object instance is actually faulty; and
removing an explicit prediction indication from the alarm if the object instance is actually faulty, wherein the alarm, when issued, comprises the explicit prediction indication, and the explicit prediction indication indicates that the alarm is based on a prediction.

According to a second aspect of the invention, there is provided an apparatus comprising:
one or more processors, and
memory storing instructions that, when executed by the one or more processors, cause the apparatus to perform:
   monitoring whether an alarm comprising a start time is received;
   performing, prior to the start time, a preemptive measure to mitigate a consequence of an object instance being faulty if the alarm comprising the start time is received; wherein
   the start time is a future time, and
   the alarm indicates that the object instance will be faulty from the start time on.

The alarm may comprise an end time or a time duration; the alarm may indicate that the object instance will be faulty until the end time and for the time duration, respectively; and the instructions, when executed by the one or more processors, may further cause the apparatus to perform reverting the preemptive measure after the end time and lapse of the time duration, respectively.

The alarm may comprise a probability; the alarm may indicate that the object instance will be faulty with the probability; and the instructions, when executed by the one or more processors, may further cause the apparatus to perform inhibiting the performing the preemptive measure if the probability is lower than a threshold.

The alarm may comprise at least one of a first accuracy indicating an accuracy of the start time and a second accuracy indicating an accuracy of the end time and the time duration, respectively; and the instructions, when executed by the one or more processors, may further cause the apparatus to perform the performing the preemptive measure for a time period depending on the start time, the end time and the time duration, respectively, and the at least one of the first accuracy and the second accuracy.

The object instance may comprise an instance of a network function involved in providing a first communication service or a component of the instance of the network function; the alarm may indicate that the first communication service is not provided; and the preemptive measure may comprise using a second communication service, wherein the instance of the network function is not involved in providing the second communication service.

According to a third aspect of the invention, there is provided a method comprising:
issuing an alarm related to an object instance, wherein the alarm comprises a start time; wherein
the start time is a future time; and
the alarm indicates that the object instance will be faulty from the start time on.

The alarm may comprise an end time or a time duration, and the alarm may indicate that the object instance will be faulty until the end time or for the time duration, respectively.

The alarm may comprise a probability, and the alarm may indicate that the object instance will be faulty with the first probability.

The alarm may comprise a first accuracy indicating an accuracy of the start time.

The alarm may comprise a second accuracy indicating an accuracy of the end time and the time duration, respectively.

The method may further comprise predicting that the object instance will be faulty from the start time on.

The method may further comprise at least one of:
predicting that the object instance will be faulty until the end time and for the time duration, respectively;
predicting the probability that the object instance will be faulty;
predicting the first accuracy of the start time; and
predicting the second accuracy of the end time and the time duration, respectively.

The method may further comprise:
receiving a prediction that the object instance will be faulty from the start time on;
generating the alarm based on the received prediction.

The received prediction may predict at least one of that the object instance will be faulty until the end time and for the time duration, respectively, the probability that the object instance will be faulty, the first accuracy of the start time, and the second accuracy of the end time.

The method may further comprise:
monitoring if the object instance is actually faulty; and at least one of:
removing the start time from the alarm if the object instance is actually faulty; and
removing an explicit prediction indication from the alarm if the object instance is actually faulty, wherein the alarm, when issued, comprises the explicit prediction indication, and the explicit prediction indication indicates that the alarm is based on a prediction.

According to a fourth aspect of the invention, there is provided a method comprising:
monitoring whether an alarm comprising a start time is received;
performing, prior to the start time, a preemptive measure to mitigate a consequence of an object instance being faulty if the alarm comprising the start time is received; wherein
the start time is a future time, and
the alarm indicates that the object instance will be faulty from the start time on.

The alarm may comprise an end time or a time duration; the alarm may indicate that the object instance will be faulty until the end time and for the time duration, respectively; and the method may further comprise reverting the preemptive measure after the end time and lapse of the time duration, respectively.

The alarm may comprise a probability; the alarm may indicate that the object instance will be faulty with the probability; and the method may further comprise inhibiting the performing the preemptive measure if the probability is lower than a threshold.

The alarm may comprise at least one of a first accuracy indicating an accuracy of the start time and a second accuracy indicating an accuracy of the end time and the time duration, respectively; and the instructions, when executed by the one or more processors, may further cause the apparatus to perform the performing the preemptive measure for a time period depending on the start time, the end time and the time duration, respectively, and the at least one of the first accuracy and the second accuracy.

The object instance may comprise an instance of a network function involved in providing a first communication service or a component of the instance of the network function; the alarm may indicate that the first communication service is not provided; and the preemptive measure may comprise using a second communication service, wherein the instance of the network function is not involved in providing the second communication service.

Each of the methods of the third and fourth aspects may be a method of predictive alarming.

According to a fifth aspect of the invention, there is provided a computer program product comprising a set of instructions which, when executed on an apparatus, is configured to cause the apparatus to carry out the method according to any of the third and fourth aspects.

The computer program product may be embodied as a computer-readable medium or directly loadable into a computer

For each of the first to fifth aspects, the alarm may comprise
- an object class to which the object instance belongs
- the object instance;
- a notification identifier;
- an event time when the alarm is raised;
- a notification type;
- a probable cause,
- a perceived severity;
- an alarm type; and
- an alarm identifier.

According to some embodiments of the invention, at least one of the following advantages may be achieved:
- the second operator may take preemptive measures in time;
- highly relevant predictions are not lost in a heap of reports;
- minimum impact on existing system;
- downwards compatibility.

It is to be understood that any of the above modifications can be applied singly or in combination to the respective aspects to which they refer, unless they are explicitly stated as excluding alternatives.

### Brief description of the drawings

Further details, features, objects, and advantages are apparent from the following detailed description of the preferred embodiments of the present invention which is to be taken in conjunction with the appended drawings, wherein:
- Fig. 1: shows a message flow according to some example embodiments of the invention;
- Fig. 2: shows a message flow according to some example embodiments of the invention;
- Fig. 3: shows an apparatus according to an example embodiment of the invention;
- Fig. 4: shows a method according to an example embodiment of the invention;
- Fig. 5: shows an apparatus according to an example embodiment of the invention;
- Fig. 6: shows a method according to an example embodiment of the invention; and
- Fig. 7: shows an apparatus according to an example embodiment of the invention.

### Detailed description of certain embodiments

Herein below, certain embodiments of the present invention are described in detail with reference to the accompanying drawings, wherein the features of the embodiments can be freely combined with each other unless otherwise described. However, it is to be expressly understood that the description of certain embodiments is given by way of example only, and that it is by no way intended to be understood as limiting the invention to the disclosed details.

Moreover, it is to be understood that the apparatus is configured to perform the corresponding method, although in some cases only the apparatus or only the method are described.

Generation and distribution of electricity must be highly available. As a consequence, the network managing the corresponding devices must be highly available, too. To guarantee the high availability, the companies generating/or and distributing electrical energy are using several, different communication technologies in parallel with the option to switch in case one of them fails.

Due to the capabilities of 5G, the energy sector ("grid operators") might use 3GPP 5G networks to control devices used to generate and/or distribute energy. In case of a failure of the 5G network, the grid operator might switch to another communication technology to maintain visibility of such devices and control them.

Currently the 3GPP management system offers alarm notifications to inform management consumers about faults and failures. These alarm notifications are send after the fault has been detected. They report about the past. That is, well-known "classical" alarms inform about incidents after they have happened, e.g. [1]. Also well-known are alarms that are raised if measurements or KPI met certain conditions. However, also these "threshold alarms" are raised after the condition has met.

However, the 3GPP management system does not offer any means to inform the management consumer about e.g. planned (or predicted) outages of a network. It would be very valuable to inform e.g. verticals (grid operators) about planned or predicted outages such that they might switch temporarily to another communication technology.

Also the Management Data Analytics Service (MDAS) or Network Data Analytics Function (NWDAF) might report about predicted incidents as result of an analysis. Currently, SA5 analyzes solutions how the MDAS might inform its consumers by "analytics reports". However, a report is different from an alarm and therefore cannot be handled by the regular, existing, and well established tool chains for alarms, which offers several well-known properties and functions for alarms: well-defined life cycle, severity, acknowledgment of alarms, clearance of alarms by the source, changing alarm attributes, etc.

Some example embodiments of the invention enhance the alarm handling framework of SA5 to express alarms that will happen (or are predicted to happen) in the future. In such example embodiments, the alarm information is enhanced by a start time (Expected start of the alarm condition). In some example embodiments, a range of time is indicated, indicating the time range when the alarm is expected to be active. For example, the alarm may comprise an expected end time of the alarm condition or an indication of a time duration. The management service producer (e.g. the mobile network operator, MNO) may send such alarm message to any subscribed management system, e.g. to management system of an operator of a power generation system or power grid operator to inform that the mobile network or parts of it will (or is predicted to) experience an outage from the start time on.

The alarm message may indicate a probability of the occurrence. In case the outage is planned, the planner might indicate that the probability of the occurrence is 100%. In case an algorithm, e.g. of MDAS or NWDAF, predicts an alarm, the algorithm has to set the probability of the occurrence according to the confidence level of the prediction. The receiver of the alarm may use the probability to decide whether or not to perform any preemptive measure to mitigate any problems caused by the fault. If the probability is lower than a threshold, the receiver of the alarm may decide not to perform a certain preemptive measure or even not to perform any preemptive measure.

In some example embodiments, the alarm may comprise one or two accuracies: a first accuracy indicating an accuracy of the start time, and a second probability indicating an accuracy of the end time and of the time duration, respectively. The receiver of the alarm may use one or both of these accuracies, together with the start time and the end time (or time duration) to determine a time period when to perform a certain preemptive measure.

The alarm message may indicate whether the alarm condition is still predicted or whether the alarm condition has occurred. As the prediction of the alarm is raised, this field shall indicate that the alarm status is "predicted"; once the predicted alarming condition gets true, the management service producer may change the status of the alarm from "predicted" to "active".

As another option, instead of or in addition to the alarm status "predicted", the management service producer may remove the start time from the alarm once the alarm condition gets actually true. I.e., the presence or absence of the start time may correspond to the alarm statuses "predicted" and "active", respectively.

These enhancements of the alarm info allows a seamless integration of predicted alarms into the standardized life cycle of alarms. The few additional, optional fields allow a cost-efficient introduction of predicted alarms into the existing tools for alarm handling in a backward compatible way.

In some example embodiments, the prediction may be made by an entity external from the managed object (e.g. MDAS or NWDAF). In these example embodiments, the predictor may inform the managed object on the prediction either by a kind of report (prediction repot) or by a predicted alarm. In the former case, the managed object may generate the predicted alarm based on the received prediction report. In the latter case, the managed object may forward the predicted alarm. If the managed object makes the prediction, or a user inputs the prediction into the managed object, the managed object may issue the alarm accordingly.

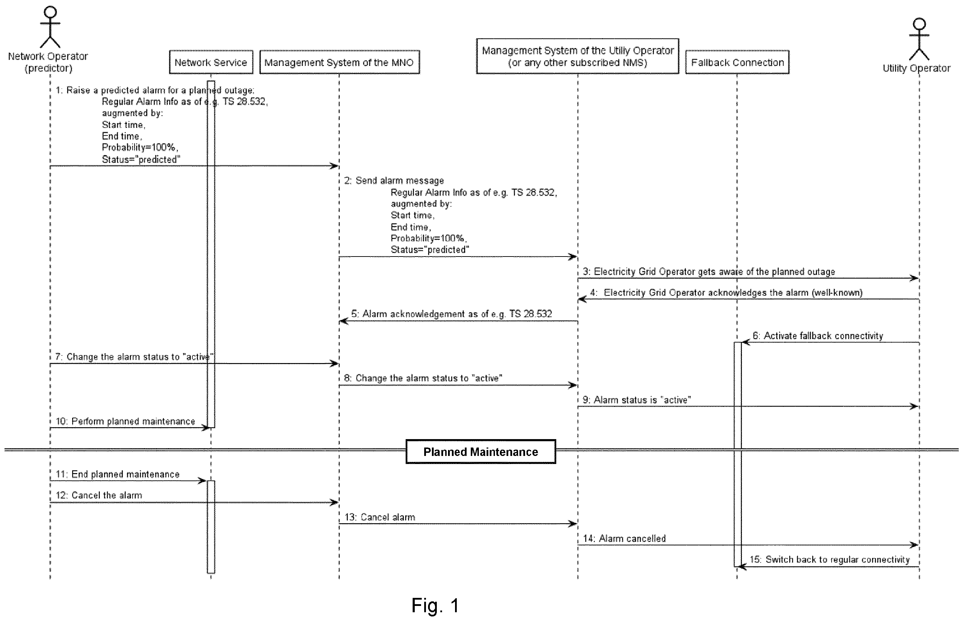

Fig. 1 shows a message sequence chart according to some example embodiments of the invention. It depicts the detailed life cycle of a predicted alarm in case the communication service provider plans maintenance work that impacts a specific service and how a communication service provider might use the regular pipe for alarms to inform a tenant, e.g. an operator of an electricity grid, who depends on the communication service.

The actions in Fig. 1 are as follows:
1. The service provider plans maintenance work that affects a (communication) service and therefore triggers the management tool to send a predicted alarm. Besides the well-known fields according to 3GPP TS 28.532, the alarm info is augmented by the predicted start time and end time of the alarm, the probability of the occurrence of the alarm, and a status flag to inform that the alarm is in state "predicted".
2. The management tool sends an alarm message for the predicted alarm to all subscribed management systems, e.g. of an electricity grid operator ("utility operator").
3. The tool informs the utility operator about the planned/predicted outage.
4. The utility operator acknowledges the alarm, i.e. it performs the very same alarm handling as with current alarms, and prepares for a fallback solution as a preemptive measure.
5. The management system of the utility operator acknowledges the alarm at the issuing management system, i.e. it performs same alarm handling as with existing alarms.
6. The utility operator activates the fallback solution
7. The (communication) service provider modifies the status of the alarm from "predicted" to "active" in the management system of the MNO.
8. The management system of the MNO uses the regular mechanisms to inform the subscribed systems (e.g. the management system of the utility operator) about the change of alarm attributes.
9. The management system of the utility operator informs the utility operator about the interruption of the service.
10. The network operator starts...
11... and ends the maintenance work.
12. As the maintenance work is done, the network operator cancels the alarm.
13. The management system of the MNO informs the management system of the utility operator of the cancellation.
14. The alarming system of the utility operator informs the utility operator about the clearance of the alarm.
15. The utility operator switches back from using the fallback to the regular (communication) service.

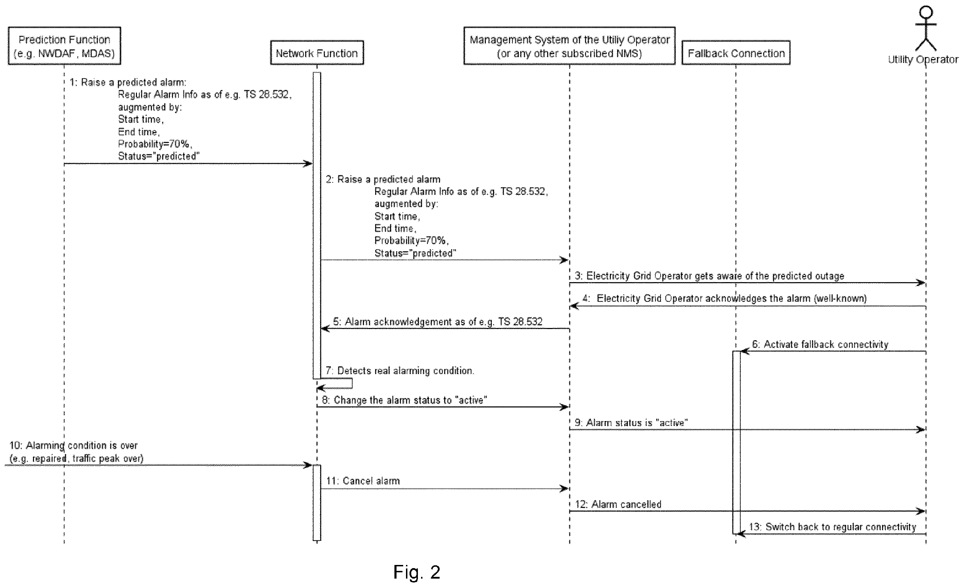

Fig. 2 shows a message sequence chart according to another example embodiment of the invention. In this example, an analytics function, such as MDAS or NWDAF, predicts that a given network function (in principle this holds for *any* managed object (e.g. managed function or managed device) that is able to send alarms) will experience some issue that might result in an outage of its (communication) service.

In Fig. 2, the actions are as follows:
1. An analytics function (e.g. MDAS or NWDAF) predicts a problem with a network function. As a consequence, the analytics function sends a predicted alarm to the network function. Besides the well-known fields according to 3GPP TS 28.532, the alarm info is augmented by the predicted start time and end time of the alarm, the probability of the occurrence of the alarm, and a status flag to inform that the alarm is in state "predicted".
2. The network function sends an alarm message for the predicted alarm to all subscribed management systems, e.g. to a management tool of an electricity grid operator ("utility operator").
3. The management tool of the utility operator informs the utility operator about the predicted outage.
4. The utility operator acknowledges the alarm, by the very same alarm handling as with current alarms, and prepares for a fallback solution as a preemptive measure.
5. The management system of the utility operator acknowledges the alarm at the issuing management system of the MNO, i.e. same alarm handling as with existing alarms.
6. The utility operator activates the fallback solution.
7. The network function was not able to avoid the predicted problem and as consequence the network function detects the alarming condition.
8. The network function modifies the status of the alarm from "predicted" to "active". The matching between the predicted alarm and the "true" alarm may be via the fields objectlnstance, eventType, probableCause and specificProblem.
9. The management system of the utility operator informs the utility operator about the interruption of the service.
10. The MNO repairs the alarming condition in the network function.
11. As the network function detects that the fault condition has been resolved, the network function cancels the alarm.
12. The management system of the utility operator informs the utility operator about the clearance of the alarm.
13. The utility operator switches back from using the fallback to the regular (communication) service.

Except for the few additional (optional) fields in the alarms, the predicted alarms can be handled by the same tools and procedures as existing alarms, but allow a whole new class of use cases regarding planned or predicted alarms. Predicted alarms avoid to introduce new concepts and new interfaces like "analytics reports" with dedicated life cycle and management processes - not only from tool point of view, but also from human operators point of view.

Note: There might be use cases where "analytics reports" are useful. But to inform about warnings and alarms the existing mechanisms are well known and implemented such that there is no need for additional concepts in parallel.

Table 1 shows how the alarm info as of 3GPP TS 28.532, Table 11.2.1.1.4.2.1, may be enhanced by the optional attributes expectedEventStart, expectedEventEnd, expectedProbability, and expectedAlarmState according to some example embodiments of the invention:

**Table 1: Enhancement of alarm info of 3GPP TS 28.532, Table 11.2.1.1.4.2.1, according to some example embodiments of the invention (M = mandatory, O = optional, C = conditional)**

| **Parameter Name** | **Qualifier** | **Matching Information/ Information Type / Legal Values** | **Comment** |
|---|---|---|---|
| objectclass | M | MonitoredEntity.objectClass It shall carry the MonitoredEntity class name. | The MonitoredEntity is identified by the relation-AlarmedObject-Alarmlnformation of the new AlarmInformation. |
| objectinstance | M | MonitoredEntity.objectInstance It shall carry the Distinguished Name (DN) of the instance of MonitoredEntity class. | The MonitoredEntity is identified by the relation-AlarmedObject-Alarmlnformation of the new AlarmInformation. |
| notificationId | M | This is an identifier for the notification, which may be used to correlate notifications. The identifier of the notification shall be chosen to be unique across all notifications of a particular managed object throughout the time that correlation is significant, it uniquely identifies the notification from other notifications generated by the subject Information Object. | |
| eventTime | M | AlarmInformation.alarmRaisedTime | |
| systemDN | c | It shall carry the DN of service providers. | |
| notificationType | M | "notifyNewAlarm. | |
| probableCause | M | AlarmInformation.probableCause | |
| perceivedSeverity | M | AlarmInformation.perceivedSeverity | |
| rootCauseIndicator | O | It indicates that this AlarmInformation is the root cause of the events captured by the notifications whose identifiers are in the related CorrelatedNotification instances. | "Yes", "No" |
| alarmType | M | AlarmInformation.eventType | The notification structure defined by this table is applicable if this parameter indicates "Communications Alarm", "Processing Error Alarm", "Environmental Alarm". "Quality Of Service Alarm" or "Equipment Alarm". |
| specificProblem | ○ | AlarmInformation.specificProblem | |
| correlatedNotifications | ○ | The set of CorrelatedNotification related to this AlarmInformation. | |
| backedUpStatus | ○ | AlarmInformation.backedUpStatus | |
| backUpObject | ○ | MonitoredEntity.objectInstance It carries the DN of the back up object. | The object is identified by relation-BackUpObject-Alarmlnformation of the new AlarmInformation. |
| trendIndication | ○ | AlarmInformation.trendIndication | |
| thresholdInfo | ○ | AlarmInformation.thresholdInfo | |
| stateChangeDefinition | ○ | AlarmInformation.stateChangeDefinition | |
| monitoredAttributes | ○ | AlarmInformation.monitoredAttributes | |
| proposedRepairActions | ○ | AlarmInformaton.proposedRepairActions | |
| additionalText | ○ | AlarmInformation,additionalText | |
| additionalInformation | ○ | AlarmInformation.additionalInformation | |
| alarmId | M | AlarmInformation.alarmId | |
| expectedEventStart | ○ | **Expected start time of a predicted alarm event** | |
| expectedEventEnd | ○ | **Expected end time of a predicted alarm event** | |
| expectedProbability | ○ | **Expected probability of a predicted alarm event** | |
| expectedAlarm | ○ | **Expectation status:** | |
| | | - **True: The alarm is expected. This should be reflected in an alarm status = "alarm outstanding" (ITU-T T-Rec X.731)** | |
| | | **- False: The alarm event has occurred, the alarm is "active". It should reflect the alarm status else than "alarm outstanding" (ITU-T T-Rec X.731).** | |
| | | **Note: For the sake of backward compatibility the absence of this optional attribute must translate to "the alarm is real".** | |
| | | | |
| NOTE: MonitoredEntity represents objects that can have an alarmed state. | | | |

Table 2 shows a corresponding enhancement of the object AlarmRecord of 3GPP TS 28.622:

**Table 2: Enhancement of the object AlarmRecord of 3GPP TS 28.622 according to some example embodiments of the invention (M = mandatory, O = optional, T = true, F = false)**

| **Attribute name** | | **Support Qualifier** | **isReadable** | **isWritable** | **isInvariant** | **isNotifyable** | | | | |
|---|---|---|---|---|---|---|---|---|---|---|
| alarmId | | M | T | F | T | F | | | | |
| objectInstance | | M | T | F | T | F | | | | |
| notificationId | | M | T | F | T | F | | | | |
| alarmRaisedTime | | M | T | F | F | F (note 5) | | | | |
| alarmChangedTime | | O | T | F | F | F (note 6) | | | | |
| alarmClearedTime | | M | T | F | F | F (note 7) | | | | |
| alarmType | | M | T | F | T | F | | | | |
| probableCause | | M | T | F | T | F | | | | |
| specificProblem | | O | T | F | T | F | | | | |
| perceivedSeverity | | M | T | T (note 4) | F | F(note 6) | | | | |
| backedUpStatus | | O | T | F | F | F | | | | |
| backUpObject | | O | T | F | F | F | | | | |
| trendIndication | | O | T | F | F | F | | | | |
| thresholdInfo | | O | T | F | F | F | | | | |
| stateChangeDefinition | | O | T | F | F | F | | | | |
| monitoredAttributes | | O | T | F | F | F | | | | |
| proposedRepairActions | | O | T | F | F | F | | | | |
| additionalText | | O | T | F | F | F | | | | |
| additionalInformation | | O (see note 3) | T | F | F | F | | | | |
| rootCauseIndicator | | O | T | F | F | F | | | | |
| ackTime | | M | T | F | F | F | | | | |
| ackUserId | | M | T | T | F | F | | | | |
| ackSystemId | | O | T | T | F | F | | | | |
| ackState | | M | T | T | F | F | | | | |
| clearUserId | | O (see note 1) | T | T | F | F | | | | |
| clearSystemId | | O (see note 1) | T | T | F | F | | | | |
| serviceUser | | O (see note 2) | T | F | F | F | | | | |
| serviceProvider | | O (see note 2) | T | F | F | F | | | | |
| securityAlarmDetector | | O (see note 2) | T | F | F | F | | | | |
| expectedEventStart | | **O** | T | F | F | F (note 6) | | | | |
| expec tedEventEnd | | **O** | T | F | F | F (note 6) | | | | |
| expectedProbability | | **O** | T | F | F | F **(note 6)** | | | | |
| expectedAlarm | | **O** | T | F | F | F (note **6, 8)** | | | | |
| NOTE 1: These attributes and qualifiers are applicable only if producer supports consumer to set perceivedSeverity to CLEARED. | | | | | | | | | | |
| NOTE 2: These attributes are supported if the producer emits noti fyNewAlarm that carries security alarm information. | | | | | | | | | | |
| NOTE 3: This attribute is supported to carry vendor specific information. | | | | | | | | | | |
| NOTE 4: This isWritable property is True only if producer supports consumer to set perceivedSeverity to CLEARED | | | | | | | | | | |
| NOTE 5: Emit notifyNewAlarm. | | | | | | | | | | |
| NOTE 6: Emit notifyChangedAlarm | | | | | | | | | | |
| NOTE 7: Emit notifyClearedAlarm | | | | | | | | | | |
| **NOTE 8: For the sake of backward compatibility the absence of this optional attribute must translate** to **"the alarm** is active". | | | | | | | | | | |
| | expectedAlarm = True: **The alarm is expected. This should be reflected in an alarm status "alarm outstanding" (ITU-T T-Rec X.731).** | | | | | | | | | |
| | expectedAlarm = False: **The alarm event has occurred, the alarm is "active". It should reflect any alarm status else than "alarm outstanding" (ITU-T T-Rec X.731).** | | | | | | | | | |

The names of the attributes are examples only and not limiting. For example, in some example embodiments, the following names may be used that correspond to the names used throughout the remainder of this application as follows:
- "startTime" ↔ "predictedAlarmRaisedTime"
- "endTime" ↔ "predictedAlarmClearedTime"
- "probability" ↔ "predictionProbability"
- "Status" ↔ "predictedAlarm".

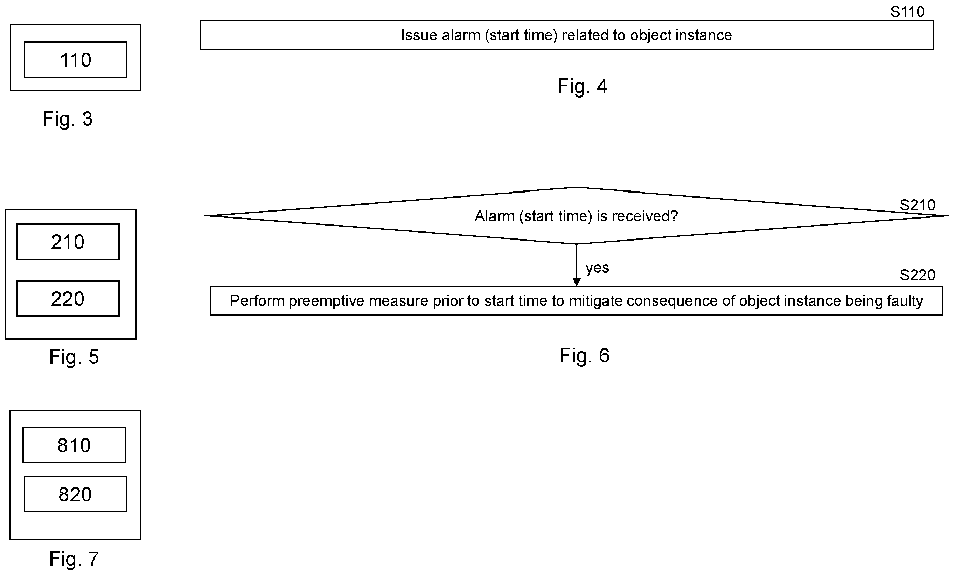

Fig. 3 shows an apparatus according to an example embodiment of the invention. The apparatus may be an alarm predictor or a managed object or an element thereof. Fig. 4 shows a method according to an example embodiment of the invention. The apparatus according to Fig. 3 may perform the method of Fig. 4 but is not limited to this method. The method of Fig. 4 may be performed by the apparatus of Fig. 3 but is not limited to being performed by this apparatus.

The apparatus comprises means for issuing 110. The means for issuing 110 may be a issuing means. The means for issuing 110 may be a issuer. The means for issuing 110 may be a issuing processor.

The means for issuing 110 issues an alarm related to an object instance (S110). The alarm comprises a start time. The start time is a future time. The alarm comprising the start time indicates that the object instance will be faulty from the start time on.

In addition, the alarm may comprise one or more of an end time (or a time duration), a probability, and a status. In some example embodiments, if the end time (or the time duration) is not provided, it means that the end of the alarm condition (where the object instance is faulty) is not known (not predictable).

Fig. 5 shows an apparatus according to an example embodiment of the invention. The apparatus may be an alarm receiver or an element thereof. Fig. 6 shows a method according to an example embodiment of the invention. The apparatus according to Fig. 5 may perform the method of Fig. 6 but is not limited to this method. The method of Fig. 6 may be performed by the apparatus of Fig. 5 but is not limited to being performed by this apparatus.

The apparatus comprises means for monitoring 210 and means for performing 220. The means for monitoring 210 and means for performing 220 may be a monitoring means and performing means, respectively. The means for monitoring 210 and means for performing 220 may be a monitor and performer, respectively. The means for monitoring 210 and means for performing 220 may be a monitoring processor and performing processor, respectively.

The means for monitoring 210 monitors whether an alarm comprising a start time is received (S210). The start time is a future time. The alarm indicates that an object instance will be faulty from the start time on.

If the alarm comprising the start time is received (S210 = yes), the means for performing 220 performs, prior to the start time, a preemptive measure to mitigate a consequence of the object instance being faulty (S220).

Fig. 7 shows an apparatus according to an example embodiment of the invention. The apparatus comprises at least one processor 810, at least one memory 820 including computer program code, and the at least one processor 810, with the at least one memory 820 and the computer program code, being arranged to cause the apparatus to at least perform at least the method according to at least one of Figs. 4 and 6 and related description.

Some example embodiments are explained with respect to a 5G network. However, the invention is not limited to 5G. It may be used in other communication networks, too, e.g. in previous of forthcoming generations of 3GPP networks such as 4G, 6G, or 7G, etc. It may be used in non-3GPP communication networks, too. It may be used in non-communication systems where alarms may be predicted and provided to another management system for alarm handling.

One piece of information may be transmitted in one or plural messages from one entity to another entity. Each of these messages may comprise further (different) pieces of information.

Names of network elements, network functions, protocols, and methods are based on current standards. In other versions or other technologies, the names of these network elements and/or network functions and/or protocols and/or methods may be different, as long as they provide a corresponding functionality. The same applies correspondingly to the terminal.

If not otherwise stated or otherwise made clear from the context, the statement that two entities are different means that they perform different functions. It does not necessarily mean that they are based on different hardware. That is, each of the entities described in the present description may be based on a different hardware, or some or all of the entities may be based on the same hardware. It does not necessarily mean that they are based on different software. That is, each of the entities described in the present description may be based on different software, or some or all of the entities may be based on the same software. Each of the entities described in the present description may be deployed in the cloud.

According to the above description, it should thus be apparent that example embodiments of the present invention provide, for example, an alarm predictor, such as a NWDAF or MDAS, or a component thereof, an apparatus embodying the same, a method for controlling and/or operating the same, and computer program(s) controlling and/or operating the same as well as mediums carrying such computer program(s) and forming computer program product(s). According to the above description, it should thus be apparent that example embodiments of the present invention provide, for example, a network function communicatively coupled to an alarm predictor, or a component thereof, an apparatus embodying the same, a method for controlling and/or operating the same, and computer program(s) controlling and/or operating the same as well as mediums carrying such computer program(s) and forming computer program product(s). According to the above description, it should thus be apparent that example embodiments of the present invention provide, for example, an alarm receiver, or a component of any of them, an apparatus embodying the same, a method for controlling and/or operating the same, and computer program(s) controlling and/or operating the same as well as mediums carrying such computer program(s) and forming computer program product(s).

Implementations of any of the above described blocks, apparatuses, systems, techniques or methods include, as non-limiting examples, implementations as hardware, software, firmware, special purpose circuits or logic, general purpose hardware or controller or other computing devices, or some combination thereof. Each of the entities described in the present description may be embodied in the cloud.

It is to be understood that what is described above is what is presently considered the preferred example embodiments of the present invention. However, it should be noted that the description of the preferred example embodiments is given by way of example only and that various modifications may be made without departing from the scope of the invention as defined by the appended claims.

The phrase "at least one of A and B" comprises the options only A, only B, and both A and B. The terms "first X" and "second X" include the options that "first X" is the same as "second X" and that "first X" is different from "second X", unless otherwise specified.

## Claims

1. Apparatus comprising:
one or more processors, and
memory storing instructions that, when executed by the one or more processors, cause the apparatus to perform:
issuing an alarm related to an object instance, wherein the alarm comprises a start time; wherein
the start time is a future time; and
the alarm indicates that the object instance will be faulty from the start time on.

2. The apparatus according to claim 1, wherein at least one of
the alarm comprises an end time or a time duration, and the alarm indicates that the object instance will be faulty until the end time or for the time duration, respectively;
the alarm comprises a probability, and the alarm indicates that the object instance will be faulty with the probability;
the alarm comprises a first accuracy indicating an accuracy of the start time; and
the alarm comprises a second accuracy indicating an accuracy of the end time and the time duration, respectively.

3. The apparatus according to any of claims 1 to 2, wherein the instructions, when executed by the one or more processors, further cause the apparatus to perform:
predicting that the object instance will be faulty from the start time on.

4. The apparatus according to claim 3 dependent on claim 2, wherein the instructions, when executed by the one or more processors, further cause the apparatus to perform at least one of:
predicting that the object instance will be faulty until the end time and for the time duration, respectively;
predicting the probability that the object instance will be faulty; and
predicting the first accuracy of the start time; and
predicting the second accuracy of the end time and the time duration, respectively.

5. The apparatus according to any of claims 1 to 2, wherein the instructions, when executed by the one or more processors, further cause the apparatus to perform:
receiving a prediction that the object instance will be faulty from the start time on;
generating the alarm based on the received prediction.

6. The apparatus according to claim 5 dependent on claim 2, wherein the received prediction predicts at least one of that the object instance will be faulty until the end time and for the time duration, respectively, the probability that the object instance will be faulty, the first accuracy of the start time, and the second accuracy of the end time and the time duration, respectively.

7. The apparatus according to any of claims 1 to 6, wherein the instructions, when executed by the one or more processors, further cause the apparatus to perform:
monitoring if the object instance is actually faulty; and at least one of:
removing the start time from the alarm if the object instance is actually faulty; and
removing an explicit prediction indication from the alarm if the object instance is actually faulty, wherein the alarm, when issued, comprises the explicit prediction indication, and the explicit prediction indication indicates that the alarm is based on a prediction.

8. Apparatus comprising:
one or more processors, and
memory storing instructions that, when executed by the one or more processors, cause the apparatus to perform:
monitoring whether an alarm comprising a start time is received;
performing, prior to the start time, a preemptive measure to mitigate a consequence of an object instance being faulty if the alarm comprising the start time is received; wherein
the start time is a future time, and
the alarm indicates that the object instance will be faulty from the start time on.

9. The apparatus according to claim 8, wherein
the alarm comprises an end time or a time duration;
the alarm indicates that the object instance will be faulty until the end time and for the time duration, respectively; and the instructions, when executed by the one or more processors, further cause the apparatus to perform
reverting the preemptive measure after the end time and lapse of the time duration, respectively.

10. The apparatus according to any of claims 8 and 9, wherein
the alarm comprises a probability;
the alarm indicates that the object instance will be faulty with the probability; and the instructions, when executed by the one or more processors, further cause the apparatus to perform
inhibiting the performing the preemptive measure if the probability is lower than a threshold.

11. The apparatus according to claim 9 or claim 10 dependent on claim 9, wherein
the alarm comprises at least one of a first accuracy indicating an accuracy of the start time and a second accuracy indicating an accuracy of the end time and the time duration, respectively;
and the instructions, when executed by the one or more processors, further cause the apparatus to perform
performing the preemptive measure for a time period depending on the start time, the end time and the time duration, respectively, and the at least one of the first accuracy and the second accuracy.

12. The apparatus according to any of claims 8 to 11, wherein
the object instance comprises an instance of a network function involved in providing a first communication service or a component of the instance of the network function;
the alarm indicates that the first communication service is not provided; and
the preemptive measure comprises using a second communication service, wherein the instance of the network function is not involved in providing the second communication service.

13. The apparatus according to any of claims 1 to 12, wherein the alarm comprises
• an object class to which the object instance belongs
• the object instance;
• a notification identifier;
• an event time when the alarm is raised;
• a notification type;
• a probable cause,
• a perceived severity;
• an alarm type; and
• an alarm identifier.

14. Method comprising:
issuing an alarm related to an object instance, wherein the alarm comprises a start time; wherein
the start time is a future time; and
the alarm indicates that the object instance will be faulty from the start time on.

15. Method comprising:
monitoring whether an alarm comprising a start time is received;
performing, prior to the start time, a preemptive measure to mitigate a consequence of an object instance being faulty if the alarm comprising the start time is received; wherein
the start time is a future time, and
the alarm indicates that the object instance will be faulty from the start time on.
